# FASCICULE DE BREVET EUROPEEN

(11) **EP 1 534 092 B1**
(45) Date de publication et mention de la délivrance du brevet: **08.10.2008**
(21) Numéro de dépôt: 03758242.6
(22) Date de dépôt: 14.08.2003
(51) Int. Cl.: A41D 13/018

(54) **DISPOSITIF DE SECURITE DU TYPE AIRBAG**
SICHERHEITSVORRICHTUNG VOM AIRBAG-TYP
AIRBAG TYPE SAFETY DEVICE

(30) Priorité: 14.08.2002 FR 0210305
(43) Date de publication de la demande: 01.06.2005
(73) Titulaire: Helite (Sarl unipersonnelle), 21380 Messigny-les-Ventoux (FR)
(72) Inventeur: THEVENOT, Gérard, F-21380 Messigny-les-Ventoux (FR)
(74) Mandataire: Honoré, Anne-Claire
(86) Numéro de dépôt international: PCT/FR2003/002537
(87) Numéro de publication internationale: WO 2004/016120

(56) Documents cités:
- FR-A- 2 802 060
- US-A- 3 768 467
- US-A- 3 895 396
- US-A- 3 911 913
- US-A- 4 943 252

## Description

La présente invention concerne un dispositif de sécurité indépendant ou solidaire d'un moyen de transport, du corps de son pilote ou du corps de toute personne pratiquant un sport ou une activité à risques, du type "airbag" qui est une marque déposée, comprenant un coussin gonflable en tissu ou similaire connecté à des moyens de gonflage déclenchés automatiquement ou manuellement afin de gonfler ledit coussin lors d'un choc.

Dans le domaine des dispositifs de sécurité du type "airbag", on connaît déjà des dispositifs comprenant un coussin gonflable en tissu ou similaire connecté à des moyens de gonflage déclenchés automatiquement ou manuellement afin de gonfler ledit coussin lors d'un choc, ledit dispositif étant contenu dans un boîtier solidaire du moyen de transport ou dans un sac à dos porté par le pilote dudit moyen de transport. C'est le cas, par exemple, du modèle d'utilité allemand DE 2.971.7771 décrivant un dispositif de protection pour protéger le corps humain lors d'un choc avec un obstacle. Le dispositif comprend deux coussins gonflables initialement contenus dans un sac à dos par exemple et qui se déploie de manière hémicylindrique lors d'un choc avec un obstacle de telle sorte que lesdits coussins gonflables entourent le haut du corps, c'est-à-dire le buste de l'utilisateur. Les coussins sont gonflés avec un dispositif d'air comprimé actionné par une corde de déchirure actionnable à la main constituée d'un câble muni à son extrémité libre d'un anneau. Selon une variante d'exécution du dispositif, les coussins sont constitués d'éléments tubulaires gonflables longitudinaux qui se rejoignent après leur gonflage afin de former une ossature globalement hémisphérique entourant l'utilisateur du dispositif.

Ce type de dispositif de sécurité à coussin gonflable présente l'inconvénient de nécessiter un temps de gonflage particulièrement long et une capacité volumique d'air comprimé importante qui ne sont compatibles ni avec le temps de réaction de l'ordre de la milliseconde, nécessaire à une bonne utilisation de ces dispositifs, ni avec un encombrement nécessairement limité. Par ailleurs, la variante d'exécution consistant dans des éléments tubulaires gonflables longitudinaux présentent l'inconvénient de ne pas protéger l'utilisateur entre deux éléments tubulaires contigus.

On connaît par ailleurs un système de coussin gonflable de sécurité pour véhicule automobile décrit dans le brevet américain US 3.887.213. Le coussin de ce système est constitué d'une ossature gonflable, connectée à des moyens de gonflage, et d'une paroi externe solidaire de ladite ossature afin de former une chambre fermée remplie d'air à la pression atmosphérique, ladite paroi étant munie de valves à sens unique, ouvertes lors du gonflage de l'ossature et du remplissage de la chambre et fermées lors d'un impact sur le coussin.

L'un des buts de l'invention est de proposer un autre dispositif de sécurité comprenant un coussin gonflable de conception simple et peu onéreuse de manière à protéger efficacement le corps humain de l'utilisateur.

A cet effet et conformément à l'invention, il est proposé un dispositif de sécurité indépendant ou solidaire d'un moyen de transport ou du corps de son pilote pour protéger ledit corps, comprenant un coussin gonflable en tissu ou similaire connecté à des moyens de gonflage déclenchés automatiquement ou manuellement afin de gonfler ledit coussin lors d'un choc ; ledit dispositif est remarquable en ce qu'il présente une disposition conforme à la revendication 1.

On comprend bien que l'air contenu dans le coussin est à la pression atmosphérique après gonflage du ou des éléments tubulaires par de l'air comprimé ou par des moyens pyrotechniques, lesdits éléments tubulaires formant une ossature qui permet ainsi de déployer, au moyen d'une bouteille de gaz comprimé de faible contenance, c'est-à-dire de faible encombrement, un ou plusieurs coussins aptes à amortir un choc en présentant un volume d'air particulièrement important. Ainsi, selon le dispositif conforme à l'invention, l'ensemble du corps humain peut être protégé avec un temps de réaction particulièrement court.

D'autres avantages et caractéristiques ressortiront mieux de la description qui va suivre de plusieurs variantes d'exécution, données à titre d'exemples non limitatifs, du dispositif de sécurité conforme à l'invention, en référence aux dessins annexés sur lesquelles :
- la figure 1 est une vue en perspective d'une première variante d'exécution du dispositif de sécurité conforme à l'invention en position gonflé,
- la figure 2 est une vue en coupe transversale du dispositif de sécurité représenté sur la figure 1,
- la figure 3 est une vue de face schématique du dispositif de sécurité conforme à l'invention porté par un pilote d'une moto,
- la figure 4 est une vue de face d'une valve du dispositif de sécurité conforme à l'invention,
- la figure 5 est une vue en élévation d'une valve du dispositif de sécurité suivant l'invention,
- la figure 6 est une vue de côté d'une autre variante d'exécution du dispositif de sécurité conforme à l'invention positionné sur un ULM, en position déployé,
- la figure 7 est une vue de face du dispositif de sécurité suivant l'invention représenté sur la figure 6,
- la figure 8 est une vue en perspective d'un sac latéral du dispositif de sécurité conforme à l'invention,
- la figure 9 est une vue en perspective du coussin frontal du dispositif de sécurité conforme à l'invention.

On décrira, dans cet exemple non limitatif, un dispositif de sécurité comprenant un coussin gonflable en tissu ou similaire connecté à des moyens de gonflage déclenchés automatiquement ou manuellement afin de gonfler ledit coussin lors d'un choc particulièrement adapté pour protéger le pilote d'une moto ou d'un ULM ; toutefois, le dispositif de sécurité conforme à l'invention trouvera de nombreuses applications notamment dans le domaine de la protection des personnes pratiquant des activités ou des sports à risques tels que les couvreurs, les escaladeurs, etc...

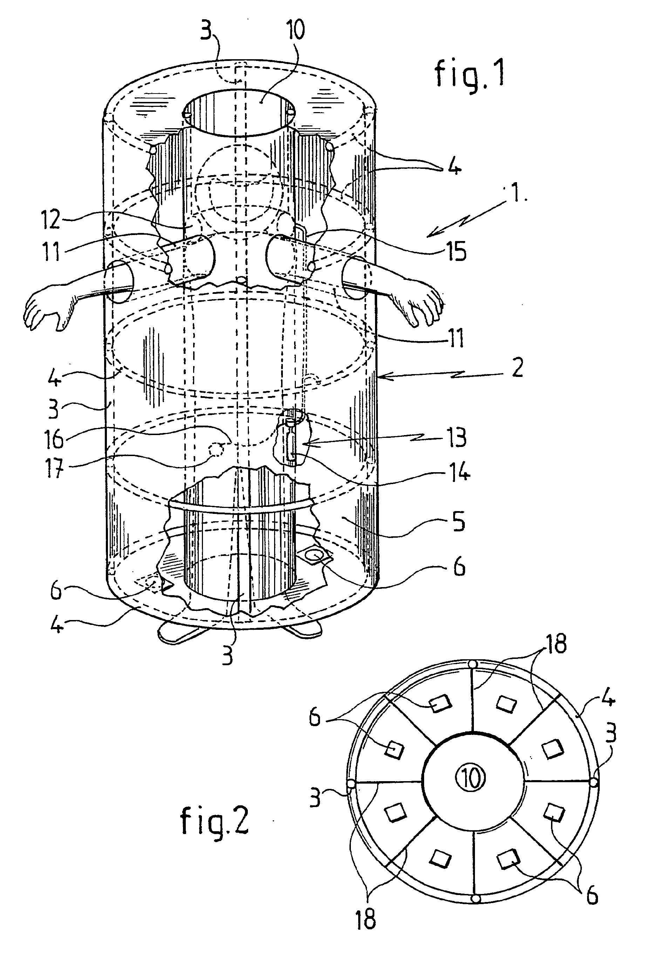

En référence à la figure 1, le dispositif de sécurité comprend un coussin 1 constitué d'une ossature 2 comprenant des éléments tubulaires longitudinaux 3, s'étendant verticalement sur la figure 1, et des éléments tubulaires transversaux 4 consistant dans des arcs de cercle dont les extrémités sont connectés aux éléments tubulaires longitudinaux 3, lesdits éléments tubulaires longitudinaux 3, et transversaux 4 étant obtenus dans un matériau imperméable et souple tel que du tissu enduit, du caoutchouc, du polyuréthane ou analogue. Lorsque les éléments tubulaires longitudinaux 3 et transversaux 4 sont gonflés, lors d'un choc avec un obstacle comme on le verra plus loin, tels que représentés sur la figure 1, lesdits éléments tubulaires longitudinaux 3 et transversaux 4 forment une ossature cylindrique. Le dispositif comprend par ailleurs, une paroi externe 5 obtenue dans un matériau souple tel que du tissu, de préférence légèrement perméable afin d'éviter l'éclatement du coussin lors d'un choc, solidaire de l'ossature 2 afin de former une chambre fermée cylindrique remplie d'air à la pression atmosphérique lorsque l'ossature 2 est gonflée comme il sera détaillé plus loin.

Il va de soi que l'ossature 2 peut comprendre des éléments tubulaires radiaux et peut consister en un unique élément tubulaire hélicoïdale par exemple, sans pour autant sortir du cadre de l'invention.

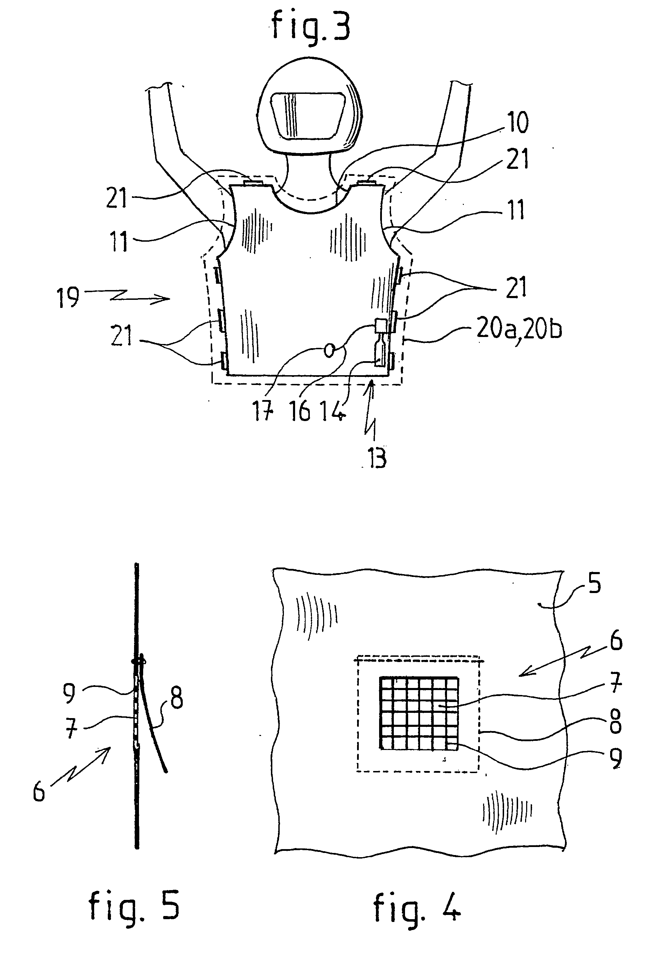

Afin de permettre le remplissage de la chambre fermée délimitée par la paroi externe du coussin 1, en référence aux figures 1, 4 et 5, ladite paroi externe 5 comprend sur la face inférieure du cylindre deux valves 6 aptes à s'ouvrir lors du gonflage de l'ossature 2 et à se refermer lorsque le coussin 1 percute un obstacle. En référence aux figures 4 et 5, chaque valve 6 consiste en un trou 7 de forme quelconque, telle que carrée par exemple, pratiquée dans la paroi externe 5 et dans un clapet 8 solidarisé à la face intérieure de la paroi externe 5 et de dimensions tout juste supérieures aux dimensions du trou 7, ledit clapet 8 étant apte à s'ouvrir lors du gonflage des éléments tubulaires et à se refermer lors d'un choc. Le clapet 8 consiste, par exemple, dans un morceau de tissu imperméable de forme carrée dont l'un des côtés est cousu le long de l'un des côtés du trou 7 sur la face intérieure de la paroi externe 5. Il va de soi que le clapet 8 peut être solidarisé sur la face intérieure de la paroi externe 5 par tout moyen approprié tel que par collage ou par soudage, sans pour autant sortir du cadre de l'invention. Accessoirement, le dispositif comprend avantageusement une grille 9 obstruant partiellement le trou 7 de la valve 6 afin d'éviter que le clapet 8 ne passe à travers ledit trou 7 lors d'un choc avec un obstacle.
Par ailleurs, en référence à la figure 1, le dispositif comprend une cheminée principale 10 en tissu ou similaire s'étendant depuis la face inférieure jusqu'à la face supérieure du cylindre, de préférence coaxialement à ce dernier, ladite cheminée principale 10 étant ouverte à ses deux extrémités qui sont solidaires de la paroi externe 5.

En référence à la figure 2, le dispositif comprend à l'intérieur du volume délimité par la paroi externe 5 solidaire de l'ossature 2 des parois internes intermédiaires 18 s'étendant radialement ici depuis la cheminée centrale 10 jusqu'à la paroi externe 5 et verticalement depuis l'extrémité inférieure jusqu'à l'extrémité supérieure du cylindre délimité par ladite paroi externe 5. Ces parois internes intermédiaires 18 sont ainsi solidaires de la face intérieure de la paroi externe 5 ou des éléments tubulaires longitudinaux 3 de l'ossature 2, lesdites parois internes intermédiaires 18 étant solidarisées par tout moyen approprié tel que par collage, par soudure ou par une ligne de couture. La paroi externe 5 comprend sur la face inférieure du cylindre des valves 6 débouchant respectivement dans un compartiment délimité par deux parois internes intermédiaires 18 successives afin de permettre le gonflage simultané des compartiments du coussin 1 lors d'un choc.

De plus, le dispositif comprend deux cheminées secondaires 11 en tissu ou similaire s'étendant radialement depuis la cheminée principale 10 jusqu'à la paroi externe 5, lesdites cheminées secondaires 11 étant ouvertes à leurs extrémités respectives qui sont solidaires respectivement de la cheminée principale 10 et de la paroi externe 5. La cheminée principale 10 et les cheminées secondaires 11 sont aptes à accueillir la tête, le buste et les jambes du pilote d'une moto et respectivement les bras dudit pilote, le corps dudit pilote étant enfilé dans lesdites cheminées constitué par un gilet lorsque le coussin 1 n'est pas gonflé, comme il sera détaillé plus loin.

Accessoirement, le dispositif comprend, en référence à la figure 1, un coussin hémi-annulaire 12 solidaire de la face intérieure de la cheminée centrale 10 à hauteur de la nuque du pilote, ledit coussin hémi-annulaire 12 étant apte à être gonflé lorsque la moto percute un obstacle afin de protéger la nuque du pilote.

Afin de permettre le gonflage de l'ossature 2, le dispositif comprend des moyens de gonflage 13 constitués de moyens pyrotechniques 14 connectés à un élément tubulaire longitudinal 3 ou un élément tubulaire transversal 4 par un tube flexible 15, et éventuellement au coussin hémi-annulaire 12, et dont les moyens pyrotechniques dont le déclenchement est assuré par un câble 16 muni à son extrémité libre d'un anneau destiné à être accroché à un emplacement approprié de la moto de sorte que lorsque la moto percute un obstacle et que le pilote est éjecté de ladite moto, le câble 16 est arraché libérant le percuteur des moyens pyrotechniques 14 afin de permettre le gonflage de l'ossature 2.

Il est bien évident que les moyens pyrotechniques 14 peuvent être substitués par tout autre moyen équivalent tel qu'un générateur de gaz de dioxyde de carbone (CO₂) ou de diazote (N₂) sans sortir du cadre de l'invention.

De plus, il va de soi que le câble 16 muni d'un anneau 17 peut être substitué par tout autre moyen de déclenchement approprié tels que des moyens de déclenchement électriques ou radio-commandés.

Dans un mode de réalisation préférée du dispositif de sécurité conforme à l'invention en référence à la figure 3, la cheminée centrale 10 et les cheminées secondaires 11 consistent dans un gilet 19 globalement en forme de tee-shirt ou de chasuble, apte à être enfilé par le pilote d'une moto, habituellement en enfilant la chasuble par la tête en levant les bras, sur lequel est solidarisé par tout moyen approprié, c'est-à-dire par des lignes de couture, de soudure ou de collage, les éléments tubulaires longitudinaux 3 et transversaux 4 ainsi que la paroi externe 5, non représentés sur la figure 3 qui sont pliés et maintenus dans cette position pliée par deux morceaux 20a, 20b, représentés en traits pointillés, de tissu souple et léger tel que du tissu contenant du lycra (marque déposée) positionnés de part et d'autre de la chasuble 19, c'est-à-dire dans le dos et le torse du pilote, lesdits morceaux de tissu 20a, 20b étant solidarisés au niveau des épaules et des flancs du torse du pilote par des moyens de fixation 21 à boucles et crochets tel que du Velcro (marque déposée). Ainsi, lorsque le pilote de la moto qui a préalablement enfilé la chasuble 19 percute un obstacle, ce dernier est éjecté de son engin provoquant l'arrachement du câble 16 qui libère le percuteur des moyens pyrotechniques 14 connectés aux éléments tubulaires longitudinaux 3 et transversaux 4 qui, sous l'effet de la pression se gonflent, déployant l'ossature 2 en remplissant d'air le volume délimité par la paroi externe 5. Le déploiement de l'ossature 2 procure l'arrachage des morceaux de tissu 20a, 20b qui maintenaient les éléments tubulaires 3 et 4 de l'ossature 2 ainsi que la paroi externe 5 en position pliée.

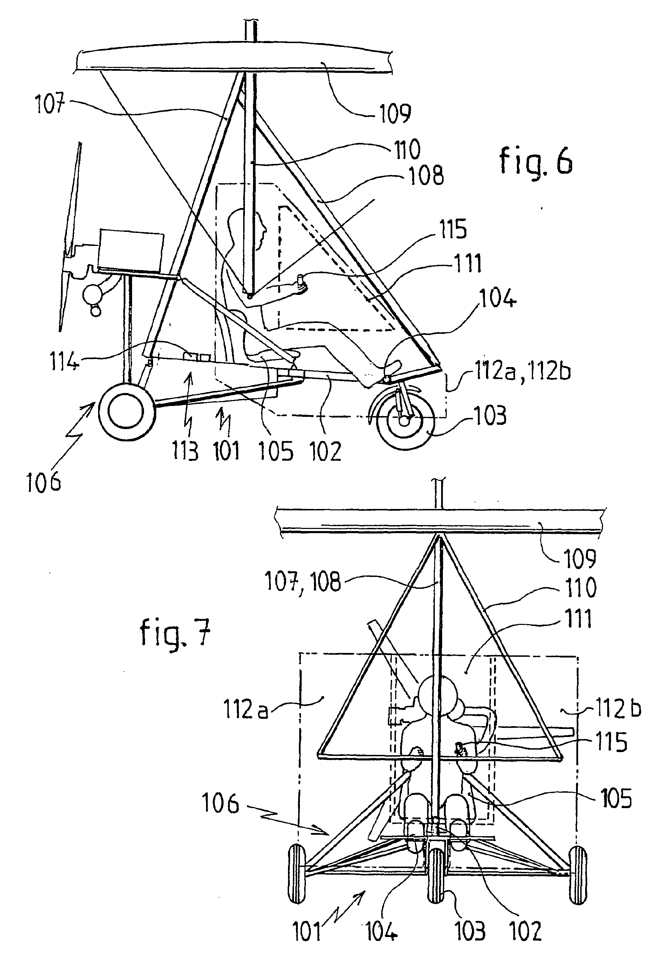

Selon une variante d'exécution du dispositif de sécurité conforme à l'invention, dans le domaine des avions ULM, c'est-à-dire des avions ultra-légers motorisés, en référence aux figures 6 à 9, classiquement constitués d'un châssis tubulaire 101 comprenant un tube central longitudinal 102 muni à l'avant d'une roue de direction 103 montée libre en rotation et muni de pédales 104 sur lesquelles viennent reposer les pieds du pilote de l'avion, d'un baquet 105 dans sa partie centrale sur lequel prend position le pilote, d'un essieu arrière solidaire de la partie arrière 106 dudit tube longitudinal central 102 et de mâts 107 et 108 respectivement solidaires des extrémités avant et arrière dudit tube central 102 sur lesquels est montée en pivot une aile delta 109 apte à être piloté par un trapèze 110, le dispositif comprend un coussin frontal 111 et deux coussins latéraux 112a et 112b aptes à protéger le pilote lors d'un choc. Dans un souci de simplification des figures 6 à 9, les parois internes intermédiaires des coussins frontal 111 et latéraux 112a et 112b n'ont pas été représentées. Le coussin frontal 111 représenté en traits pointillés, et les deux coussins latéraux 112a et 112b, représentés en traits mixtes, sont initialement contenus dans un boîtier solidaire de la partie avant de l'ULM, de préférence sur le tube central longitudinal 102 de l'ULM. Le dispositif comprend, par ailleurs, des moyens de gonflage 113 consistant dans une bouteille de gaz 114 de dioxyde de carbone ou analogue comprimé positionnée à l'arrière du baquet 105 du pilote apte à être actionnée par des moyens de déclenchement manuels 115 ou électriques tels qu'un interrupteur positionné à portée de main du pilote afin que ce dernier puisse actionner le dispositif de sécurité avant le choc.

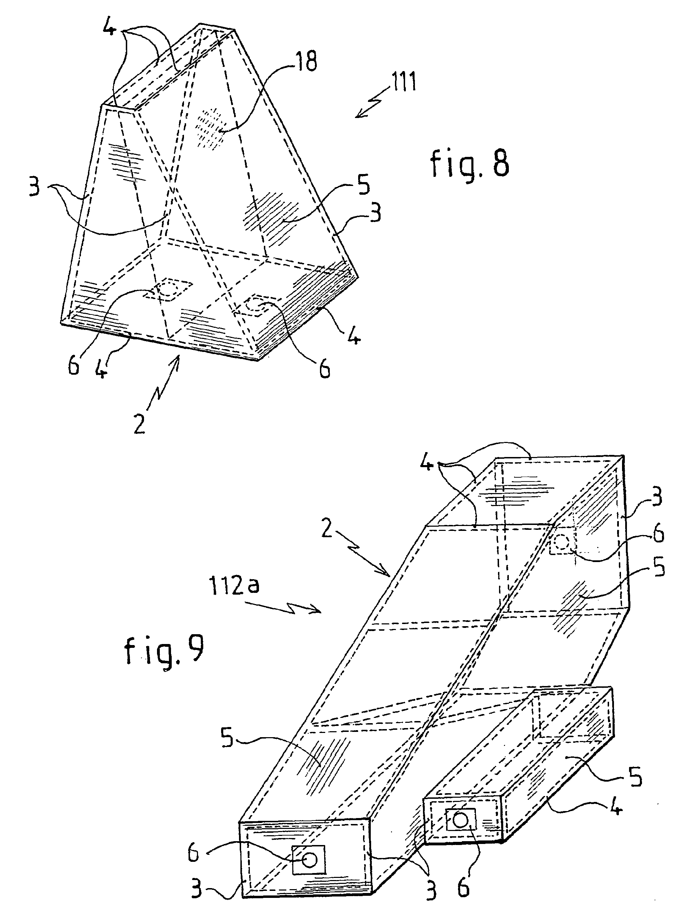

En référence aux figures 8 et 9, le coussin frontal 111 et les coussins latéraux 112a et 112b sont constitués d'une part d'une ossature 2 comprenant des éléments tubulaires longitudinaux 2 et transversaux 4 connectés entre eux afin de former une ossature 2 globalement parallélépipédique lorsque lesdits éléments tubulaires sont gonflés, et d'autre part d'une paroi externe 5 obtenu dans un matériau souple solidaire de l'ossature 2 afin de former une chambre fermée remplie d'air à la pression atmosphérique, ladite paroi externe 5 comprenant au moins une valve 6 telle que décrite précédemment s'ouvrant lors du gonflage de l'ossature 2 et se refermant lors du choc. De la même manière que précédemment, le dispositif peut comprendre à l'intérieur du volume délimité par la paroi externe solidaire de l'ossature 2 au moins une paroi interne intermédiaire 18, représentée en traits pointillés sur la figure 8 solidaire de la face intérieure de la paroi externe 5 et/ou de l'ossature 2, ladite paroi externe 5 étant munie d'au moins une valve 6 débouchant dans le volume délimité par la paroi interne intermédiaire 18 et s'ouvrant lors du gonflage de l'ossature et se refermant lors du choc. Dans cet exemple de réalisation non limitatif, en référence aux figures 8 et 9, le coussin frontal présente, lorsqu'il est gonflé, une forme globalement trapézoïdale et les coussins latéraux 112a et 112b ont une forme globalement parallélépipédique.

Il va de soi que le coussin frontal 111 et les coussins latéraux 112a et 112b peuvent présenter une forme quelconque telle que sphérique, cylindrique, hémisphérique, etc ... sans pour autant sortir du cadre de l'invention.

On observera que le gaz contenu dans le coussin est essentiellement constitué d'air à la pression atmosphérique de sorte que le dispositif selon l'invention pourra avantageusement être utilisé par des randonneurs ou des skieurs hors piste en cas d'enfouissement dans une avalanche où l'air du coussin assurera avantageusement la survie des randonneurs.

Enfin, il est bien évident que le dispositif de sécurité conforme à l'invention peut être utilisé par les pompiers en tant que moyen de réception d'un corps en chute libre, par des sportifs tels que des escaladeurs, des pratiquants de canyoning, de parapente, ou bien par des pratiquants d'activités à risques et peut être adapté à tous les moyens de transport, tels que moto, avion, voiture, etc ... et que les exemples que l'on vient de donner ne sont que des illustrations particulières en aucun cas limitatives quant aux domaines d'application de l'invention.

## Revendications

1. Dispositif de sécurité indépendant ou solidaire d'un moyen de transport, du corps de son pilote ou du corps de toute personne pratiquant un sport ou une activité à risques pour protéger ledit corps, comprenant un coussin (1,111,112a,112b) gonflable en tissu ou similaire connecté à des moyens de gonflage (13) déclenchés automatiquement ou manuellement afin de gonfler ledit coussin lors d'un choc, le coussin (1) étant constitué d'une part, d'une ossature (2) comprenant au moins un élément tubulaire afin de former une ossature (2) cylindrique, sphérique, parallélépipédique ou similaire, lorsque l'élément tubulaire (3,4) est gonflé, ledit élément tubulaire (3,4) étant initialement replié dans un contenant solidaire, par exemple, du moyen de transport et/ou d'un corps humain et connecté aux moyens de gonflage (13), et d'autre part, d'une paroi externe (5) obtenue dans un matériau souple solidaire de l'ossature (2) afin de former une chambre fermée remplie d'air à la pression atmosphérique, ladite paroi externe (5) comprenant au moins une valve (6) s'ouvrant lors du gonflage de l'ossature (2) et se refermant lors du choc , **caractérisé en ce qu'**il comprend à l'intérieur du volume délimité par la paroi externe (5) solidaire de l'ossature (2) au moins une paroi interne intermédiaire (18) solidaire de la face intérieure de la paroi externe (5) et/ou de l'ossature (2), ladite paroi externe (5) étant munie d'au moins une valve (6) débouchant dans le volume délimité par la paroi interne intermédiaire (18) et s'ouvrant lors du gonflage de l'ossature (2) et se refermant lors du choc.

2. Dispositif de sécurité suivant l'une quelconque des revendications précédentes, **caractérisé en ce qu'**il comprend au moins une cheminée principale (10) en tissu ou similaire s'étendant depuis deux faces opposées de la paroi externe (5), ladite cheminée (10) étant ouverte à ses deux extrémités qui sont solidaires de ladite paroi externe (5).

3. Dispositif de sécurité suivant la revendication 2, **caractérisé en ce qu'**il comprend au moins une cheminée secondaire (11) en tissu ou similaire s'étendant depuis la cheminée principale (10) jusqu'à la paroi externe (5), ladite cheminée secondaire (11) étant ouverte à ses deux extrémités qui sont solidaires respectivement de la cheminée principale (10) et de la paroi externe (5).

4. Dispositif de sécurité suivant l'une quelconque des revendications précédentes, **caractérisé en ce que** la valve (6) consiste d'une part dans un trou (7) pratiqué dans la paroi externe (5) et d'autre part dans un clapet (8) solidarisé à la face intérieure de la paroi externe (5) et de dimensions tout juste supérieures aux dimensions du trou (7), ledit clapet (8) étant apte à s'ouvrir lors du gonflage des éléments tubulaires (3,4) et à se refermer lors du choc.

5. Dispositif de sécurité suivant la revendication 4, **caractérisé en ce qu'**il comprend une grille (9) obturant partiellement le trou (7) de la valve (6).

6. Dispositif de sécurité suivant l'une quelconque des revendications précédentes, **caractérisé en ce que** les moyens de gonflage (13) consistent dans une bouteille de gaz comprimé (114).

7. Dispositif de sécurité suivant l'une quelconque des revendications 1 à 5, **caractérisé en ce que** les moyens de gonflage (13) consistent dans des moyens pyrotechniques (14).

8. Application du dispositif de sécurité suivant l'une quelconque des revendications 1, 2 ou 4 à 7 à un appareil volant du type ULM comprenant un coussin frontal (111) et deux coussins latéraux (112a et 112b).

## Claims

1. A safety device, independent or integral with a transport means, the body of pilot thereof or the body of any person practicing sport or an activity bearing risks to protect said body, including an inflatable bag (1,111,112a,112b) made of a woven fabric or the like connected to inflating means (13) automatically or manually activated to inflate said bag upon an impact, the bag (1) being made first of a backbone (2) comprising at least a tubular element to form a cylinder, sphere, parallelepiped shape or the like, when the tubular element (3, 4) is inflated, said tubular element (3, 4) being initially folded in an integral container, for example, of the transport means and/or of a human body and connected to the inflating means (13), and secondly of an external wall (5) made of a flexible material integral with the backbone (2) in order to form a closed chamber filled with air at atmospheric pressure, said external wall (5) including at least a valve (6) opening upon inflating the backbone (2) and closing upon the impact, **characterized in that** the device includes inside the volume defined by the external wall (5) integral with the backbone (2), at least an intermediate internal wall (18) integral with the inside face of the external wall(5) and/or the backbone (2), said external wall (5) being provided with at least a valve (6) opening to the volume defined by the intermediate internal wall (18) and opening upon inflating the backbone (2) and closing upon the impact.

2. A safety device according to any of the preceding claims, **characterized in that** the device includes at least a primary chimney (10) made of a woven fabric or the like extending from two opposite faces of the external wall (5), said chimney (10) being open at both ends thereof which are integral with said external wall (5).

3. A safety device according to claim 2, **characterized in that** the device includes at least a secondary chimney (11) of woven fabric or the like extending from the primary chimney (10) up to the external wall (5), said secondary chimney (11) being open at both ends thereof which are integral with the primary chimney (10) and the external wall (5), respectively.

4. A safety device according to any of the preceding claims, **characterized in that** the valve (6) consists, first, of a hole (7) made in the external wall (5), and secondly, in an operating spindle (8) made integral with the inside face of the external wall(5) and having a size just greater than the size of the hole (7), said operating spindle (8) being adapted to open upon inflation of the tubular elements (3, 4) and to close upon the impact.

5. A safety device according to claim 4, **characterized in that** the device includes a grid (9) partially blocking the hole (7) of the valve (6).

6. A safety device according to any of the preceding claims, **characterized in that** the inflating means (13) consist of a compressed gas bottle (114).

7. A safety device according to any of claims 1 to 5, **characterized in that** the inflating means (13) consist of pyrotechnic means (14).

8. An application of the safety device according to any of claims 1, 2 or 4 to 7 to an ULM-type aircraft including a front bag (111) and two side bags (112a and 112b).

## Patentansprüche

1. Sicherheitsvorrichtung, unabhängig von einem Transportmittel, vom Körper seines Fahrers oder vom Körper einer anderen Person, die einen Sport oder eine mit Risiken verbundene Tätigkeit betreibt, oder fest mit ihm verbunden, um diesen Körper zu schützen, umfassend einen aufblasbaren Kissen (1,111,112a,112b) aus Stoff o.ä., das an Ausblasmittel (13) angeschlossen ist, die automatisch oder von Hand ausgelöst werden, um bei einem Aufprall aufgebläht zu werden, wobei das Kissen (1) einerseits aus einem Rahmen (2) besteht, der mindestens ein rohrförmiges Element besitzt, um einen zylindrischen, kugelförmigen, quaderförmigen o.a. Rahmen (2) zu bilden, wenn das rohrförmige Element (3,4) aufgebläht wird, wobei sich das rohrförmige Element (3, 4) ursprünglich zusammengefaltet in einem Behälter befindet, der z. B. fest mit dem Transportmittel und/oder einem menschlichen Körper verbundenen und an die Aufblasmittel (13) angeschlossen ist, und andererseits aus einer Außenwand (5) besteht, die aus einem flexiblen, fest mit dem Rahmen (2) verbundenen Material besteht, um eine mit Luft bei atmosphärischen Druck gefüllte, geschlossene Kammer zu bilden, wobei die Außenwand (5) mindestens ein Ventil (6) besitzt, das sich beim Aufblähen des Rahmens (2) öffnet und bei einem Aufprall schließt, **dadurch gekennzeichnet, dass** sie im Inneren des von der fest mit dem Rahmen (2) verbundenen Außenwand (5) begrenzten Volumens mindestens eine innere, fest mit der Innenseite der Außenwand (5) und/oder dem Rahmen (2) verbundene Zwischenwand (18) besitzt, wobei die Außenwand (5) mit mindestens einem Ventil (6) versehen ist, das in das Volumen mündet, die von der inneren Zwischenwand (18) begrenzt ist und das sich beim Aufblähen des Rahmens (2) öffnet und bei einem Aufprall schließt.

2. Sicherheitsvorrichtung nach einem der vorhergehenden Ansprüche, **dadurch gekennzeichnet, dass** sie mindestens ein Hauptaustrittsrohr (10) aus Stoff o.ä. besitzt, das von der einen zur gegenüberliegenden Seite der Außenfläche (5) reicht, wobei dieses Austrittsrohr (10) an seinen beiden, fest mit der Außenwand (5) verbundenen Enden geöffnet ist.

3. Sicherheitsvorrichtung nach Anspruch 2, **dadurch gekennzeichnet, dass** sie mindestens ein Nebenaustrittsrohr (11) aus Stoff o.ä. besitzt, das vom Hauptaustrittsrohr (10) bis zur Außenfläche (5) reicht, wobei dieses Nebenaustrittsrohr (11) an seinen beiden, jeweils fest mit dem Hauptaustrittsrohr (10) und der Außenwand (5) verbundenen Enden geöffnet ist.

4. Sicherheitsvorrichtung nach einem der vorhergehenden Ansprüche, **dadurch gekennzeichnet, dass** das Ventil (6) einerseits aus einem in der Außenwand (5) angebrachten Loch (7) und andererseits einer Ventilklappe (8) besteht, die fest mit der Innenseite der Außenwand (5) verbunden ist und deren Abmessungen geringfügig größer sind als die des Lochs (7), wobei sich die Ventilklappe (8) beim Aufblähen der rohrförmigen Elemente (3, 4) öffnen und bei einem Aufprall schließen kann.

5. Sicherheitsvorrichtung nach Anspruch 4, **dadurch gekennzeichnet, dass** sie ein Gitter (9) besitzt, mit dem das Loch (7) des Ventils (6) teilweise verschlossen ist.

6. Sicherheitsvorrichtung nach einem der vorhergehenden Ansprüche, **dadurch gekennzeichnet, dass** die Aufblasmittel (13) aus einer Druckgasflasche (114) bestehen.

7. Sicherheitsvorrichtung nach einem der vorhergehenden Ansprüche, **dadurch gekennzeichnet, dass** die Aufblasmittel (13) aus pyrotechnischen Mitteln (14) bestehen.

8. Anwendung der Sicherheitsvorrichtung nach einem der Ansprüche 1, 2 4 bis 7 bei einem Gerät wie einem Ultraleichtflugzeug, das ein frontales Kissen (111) und zwei seitliche Kissen (112a und 112b) umfasst.
